# EUROPÄISCHE PATENTSCHRIFT

(11) **EP 1 392 469 B1**
(45) Veröffentlichungstag und Bekanntmachung des Hinweises auf die Patenterteilung: **28.02.2007**
(21) Anmeldenummer: 02742781.4
(22) Anmeldetag: 24.05.2002
(51) Int. Cl.: B23P 11/02, F01L 1/047, F16D 1/08, F16B 4/00

(54) **VERFAHREN ZUR DREHFESTEN BEFESTIGUNG VON TRIEBTEILEN AUF WELLEN**
METHOD FOR FIXING PROPULSION PARTS ON SHAFTS IN A ROTATIONALLY FIXED MANNER
PROCEDE POUR LA FIXATION SOLIDAIRE EN ROTATION DE PIECES D'ENTRAINEMENT SUR DES ARBRES

(30) Priorität: 29.05.2001 DE 10126277; 16.08.2001 DE 10139183
(43) Veröffentlichungstag der Anmeldung: 03.03.2004
(73) Patentinhaber: Dorner, Reiner, 74405 Gaildorf (DE)
(72) Erfinder: Dorner, Reiner, 74405 Gaildorf (DE)
(74) Vertreter: Herzog, Günter
(86) Internationale Anmeldenummer: PCT/DE2002/001882
(87) Internationale Veröffentlichungsnummer: WO 2002/096596

(56) Entgegenhaltungen:
- EP-A- 0 892 156
- DE-A- 3 301 749
- DE-A- 3 431 361
- DE-A- 3 525 186
- JP-A- 2001 092 523
- JP-A- 2002 028 827
- US-A- 4 305 203
- US-A- 4 616 389
- US-A- 4 983 797
- PATENT ABSTRACTS OF JAPAN vol. 1999, no. 13, 30. November 1999 (1999-11-30) -& JP 11 210413 A (TOYOTA MOTOR CORP), 3. August 1999 (1999-08-03)
- PATENT ABSTRACTS OF JAPAN vol. 1998, no. 02, 30. Januar 1998 (1998-01-30) -& JP 09 277121 A (NIPPON STEEL CORP), 28. Oktober 1997 (1997-10-28)
- PATENT ABSTRACTS OF JAPAN vol. 018, no. 258 (M-1606), 17. Mai 1994 (1994-05-17) -& JP 06 039764 A (TOYOTA MOTOR CORP;OTHERS: 01), 15. Februar 1994 (1994-02-15)
- PATENT ABSTRACTS OF JAPAN vol. 2000, no. 19, 5. Juni 2001 (2001-06-05) -& JP 2001 038659 A (TOSHIBA MACH CO LTD;HOKKAIDO), 13. Februar 2001 (2001-02-13)
- PATENT ABSTRACTS OF JAPAN vol. 2000, no. 06, 22. September 2000 (2000-09-22) -& JP 2000 073709 A (TOYOTA MOTOR CORP), 7. März 2000 (2000-03-07)

## Beschreibung

### Stand der Technik

Die Erfindung geht aus von einem Verfahren zur drehfesten Befestigung eines Triebteils, wie Nocken, Zahnrad, Scheibe, Rad oder dgl., auf einer Welle, nach der Gattung des Hauptanspruchs. Bei einem bekannten Verfahren der gattungsgemäßen Art (DE 37 17 190 C2) werden die Nocken und die Welle getrennt gefertigt und dann zu einer baulichen Einheit zusammengefügt, wobei an den Stellen der Welle, an denen nachher die Nocken befestigt werden sollen, durch Walzen oder Rollen eine Vergrößerung des Durchmesser durch wulstartige Materialverdrängungen gebildet werden. Die Bohrung des Nockens hat einen radial nach innen vorstehenden Vorsprung, der beim axialen Aufschieben des Nockens auf die Welle durch spanabhebende Formung in den wulstartigen Materialverdrängungen Nuten erzeugt. Dieses Verfahren hat den Nachteil, dass auf der Welle die wulstartigen Materialverdrängungen für einen nächsten Nocken erst nach Aufschieben des vorigen Nockens auf die Welle möglich sind. Dies bedeutet, dass die Welle zeitaufwendig immer wieder bearbeitet werden muss, wobei auch die mechanischen Eigenschaften und die Geometrie der Nockenwelle verändert werden.

Bei einem anderen bekannten Verfahren (DE 35 25 186 C2) werden die Steuerelemente in axialer Flucht und bezüglich ihrer gegenseitigen Abstände in einer Reihe positioniert und gehalten. Anschließend werden sämtliche Steuerelemente auf einmal erwärmt, beziehungsweise die gesamte Nockenwelle abgekühlt. Anschließend wird die Hohlwelle in einer unterbrechungslosen zügigen Bewegung durch die Bohrungen aller Steuerelemente geschoben und die Temperatur der Hohlwelle und der Steuerelemente angeglichen. Bei diesem Verfahren ist eine Vorrichtung notwendig, bei der für jedes Steuerelement ein extra Haltearm vorhanden sein muss, so dass für jede unterschiedliche Nockenwelle die Vorrichtung geändert werden muss. Außerdem ist ein Ofen notwendig, der die gesamten Steuerelemente in ihren Positionen auf einmal erwärmt, beziehungsweise ein Kühlaggregat, welches die gesamte Nockenwelle auf dieselbe Temperatur kühlt.

Bei einem ähnlichen Verfahren (DE 34 31 361 C2) werden die Nocken nach dem Temperaturausgleich mit der Hohlwelle noch durch Löten oder Schweißen verbunden. Dies bedeutet einen zusätzlichen Arbeitsgang, der zusätzliche Geräte und Arbeitszeit benötigt.

Nach einem anderen Verfahren (EP 0 892 156 A1) zur Herstellung einer Nockenwelle wird jeder Nocken in einer Heizeinrichtung auf eine vorbestimmte Temperatur erwärmt und anschließend in einer Haltevorrichtung positioniert und von einer Spannvorrichtung fixiert. Die Spannvorrichtung greift an gegenüberliegenden Seiten des Nockens an. Von oben auf den Nocken aufsetzbare Klemmen dienen als Niederhalter. Die Welle wird so in ein Spannfutter eingespannt, dass ihre Drehung um die eigene Achse verhindert wird. Die Position des Spannfutters wird sowohl in axialer als auch in radialer Richtung mittels einer numerischen Steuerung exakt gesteuert. Danach wird die bereits hinsichtlich der Koaxialität und der Winkelposition exakt positionierte Welle in die Öffnung des Nockens eingeschoben. Diese Position wird so lange beibehalten, bis der Nocken so weit abgekühlt ist, dass zwischen Nocken und Welle eine fester Schrumpfsitz besteht. Erst danach wird die Welle mit aufgeschrumpften Nocken aus der Halterung herausgezogen und in den nächsten erwärmten und in gleicher Weise wie zuvor beschrieben positionierten Nocken eingeführt, wobei die Welle um den vorgesehenen Winkelversatz des zweiten Nockens gedreht wird. Dieser Vorgang wiederholt sich entsprechend der Anzahl der auf der Welle zu montierenden Nocken Die EP 0 892 156 A1, ist der nächstliegende Stand der Technik und offenbart ein Verfahren nach dem Oberbegriff des Hauptanspruchs.

### Die Erfindung und ihre Vorteile

Die Erfindung ist im Anspruch 1 dargestellt. Weitere vorteilhafte Ausgestaltungen des erfindungsgemäßen Verfahrens bilden den Gegenstand der abhängigen Ansprüche.

Das erfindungsgemäße Verfahren, mit den kennzeichnenden Merkmalen des Hauptanspruchs, hat demgegenüber den Vorteil, dass das drehfest zu befestigende Triebteil wie Nocken, Zahnrad, Scheibe, Rad o. dgl. vor seiner Montage nur so stark erwärmt werden muss, dass die durch die Erwärmung gegebene Aufweitung der Bohrung des Triebteils einen größeren Innendurchmesser ergibt als der Außendurchmesser der Welle ist. Hierdurch kann das erwärmte Triebteil auf die Welle geschoben bzw. die Welle in die Ausnehmung des erwärmten Triebteils geschoben und dort positioniert werden, bis das Triebteil abgekühlt ist und sich der Innendurchmesser der Ausnehmung des Triebteils so weit verringert, dass sich das Triebteil auf der Welle fest spannt. Erfindungsgemäß holt ein mit einem Greifer ausgebildeter Roboter die erwärmten. Triebteile nach der Heizstrecke ab und positioniert sie automatisch auf der Welle, wodurch die Positions- und Ausrichtgenauigkeit erhöhbar ist.

Nach einer vorteilhaften Ausgestaltung der Erfindung wird das Triebteil in einer Heizeinheit erwärmt, indem das zu erwärmende Werkstück durch eine definierte Heizstrecke geführt wird, um die gewünschte Temperatur mit möglichst geringem Regelungsaufwand zu erreichen.

Nach einer weiteren vorteilhaften Ausgestaltung der Erfindung wird das Triebteil stationär mit einem Induktionsdorn, mit Heißluft, mit Infrarot oder mit Kontaktwärme erwärmt, um den Bauraum gering zu halten.

Nach einer zusätzlichen vorteilhaften Ausgestaltung der Erfindung wird das Triebteil je nach Anwendung gerade so stark erwärmt, damit sich zum einen die Bohrung des Triebteils ausreichend ausdehnt und zum anderen das Triebteil ausreichend kühl bleibt, um eine Veränderung seines Gefüges zu vermeiden.

Nach der Erfindung wird das Triebteil auf der Welle maßgenau positioniert.

Nach einer zusätzlichen vorteilhaften Ausgestaltung der Erfindung wird das Ende der Erwärmungsphase optisch angezeigt.

Nach einer zusätzlichen vorteilhaften Ausgestaltung der Erfindung wird das Triebteil nach der Positionierung auf der Welle gekühlt, um das Aufschrumpfen zu beschleunigen und damit die Prozessgeschwindigkeit zu erhöhen.

Nach einer zusätzlichen vorteilhaften Ausgestaltung der Erfindung wird nach dem Positionieren und Aufschrumpfen des Triebteils die axiale Position und / oder Ausrichtung gemessen, um den Fügevorgang zu überwachen.

Nach einer zusätzlichen vorteilhaften Ausgestaltung der Erfindung wird die gemessene Position mit der vorgegebenen Toleranz verglichen. Wenn sie innerhalb der Toleranz liegt, wird der Fügevorgang fortgesetzt. Wenn sie außerhalb der Toleranz liegt, kann der Fügevorgang sofort abgebrochen und die Welle ausgeschleust werden, um Arbeitszeit und Arbeitsmaterial zu sparen.

Nach einer zusätzlichen vorteilhaften Ausgestaltung der Erfindung wird die gemessene axiale Position zur Regelung der Fertigung verwendet, um die Präzision weiter zu erhöhen.

Nach einer zusätzlichen vorteilhaften Ausgestaltung der Erfindung wird die Temperatur der Welle gemessen, um deren Ausdehnung zu ermitteln.

Nach einer zusätzlichen vorteilhaften Ausgestaltung der Erfindung wird mit einem Rechner die veränderte Position, die durch die in Folge des Wärmeübergangs von den Triebteilen auf die Welle eintretende Ausdehnung der Welle entsteht, neu bestimmt, um die Prozessgeschwindigkeit nicht durch Warten, bis die Welle wieder die Ausgangstemperatur erreicht hat, verringern zu müssen.

Nach einer weiteren vorteilhaften Ausgestaltung der Erfindung wird der Greifer mit mindestens einer Überlastschnittstelle ausgeführt, damit die für das Verfahren verwendete Vorrichtung von Kollisionen bzw. unerwarteten Blockierungen geschützt werden kann, indem Teile des Greifers sich ablösen können. Diese können anschließend, z. B. über Positionierstifte, exakt wieder eingeklinkt werden.

Nach einer weiteren vorteilhaften Ausgestaltung der Erfindung wird der Roboter mittels einer speziellen Messtasteranordnung und / oder eines Bezugsbauteils eingestellt und / oder geteacht, um das Verfahren mit entsprechender Präzision zu ermöglichen.

Nach einer weiteren vorteilhaften Ausgestaltung der Erfindung werden nichtsymmetrische Triebteile während des Positionierens an der vorbestimmten Stelle der Welle, auch in ihrer vorbestimmten Phasenlage positioniert, da eine spätere Bearbeitung dieses Triebteils die Präzision und die Haltekraft auf der Welle beeinträchtigen würde.

Nach einer weiteren vorteilhaften Ausgestaltung der Erfindung werden das bzw. die Triebteile auf einen Aufwärmdorn oder -gerät gelegt, von welchem es automatisch abgeholt wird.

Weitere Vorteile und vorteilhafte Ausgestaltungen der Erfindung sind der nachfolgenden Beschreibung und den Ansprüchen entnehmbar.

### Zeichnung

In einer Zeichnung ist eine Einrichtung zur Durchführung des erfindungsgemäßen Verfahrens dargestellt.

### Beschreibung der Ausführungsbeispiele

Gemäß dem erfindungsgemäßen Verfahren wird ein Puffer 1 der Heizeinheit 2 manuell oder automatisch mit Triebteilen 3 wie Nocken, Zahnräder, Scheiben oder Räder bestückt, die anschließend automatisch aus dem Puffer 1 genommen und mit einem Transportsystem durch die Heizeinheit 2 geführt werden. Dabei wird die Temperatur der Heizeinheit 2 so eingestellt, dass ein Triebteil 3 nach Passieren der Heizstrecke 4 die notwendige prozesssichere Temperatur hat. Nachdem durch eine optische Anzeige das Ende der Erwärmungsphase angezeigt wurde, wird das Triebteil 3 entnommen und zu einer Fügeeinheit 6 transportiert. Dort wird das Triebteil 3 positionsgerecht auf eine Welle 7 geschoben und gehalten, bis das Triebteil 3 durch sein Abkühlen auf die Welle 7 aufgeschrumpft ist.

Bei der vollautomatischen Ausgestaltung des erfindungsgemäßen Verfahrens wird nach der Heizeinheit 2 ein mit einem Greifer ausgebildeter Roboter eingesetzt, der die Triebteile 3 am Ende der Heizstrecke 4 aufnimmt und diese in der Fügeeinheit 6 positionsgerecht auf die Welle 7 setzt. Um das Aufschrumpfen zu beschleunigen, kann das Triebteil 3 gekühlt werden. Durch das Aufbringen der erwärmten Triebteile 3 auf die Welle 7 wird diese erwärmt, so dass ein Teil der Wärme durch Kühlung der Welle 7 abgeführt wird. Der andere Teil der Wärme führt zu einer gewissen Ausdehnung der Welle 7, wodurch sich die Position, an der das Triebteil 3 angeordnet werden soll, verändert. Diese veränderte Position wird durch einen Rechner bestimmt, der den Roboter entsprechend steuert und die Veränderung korrigiert.

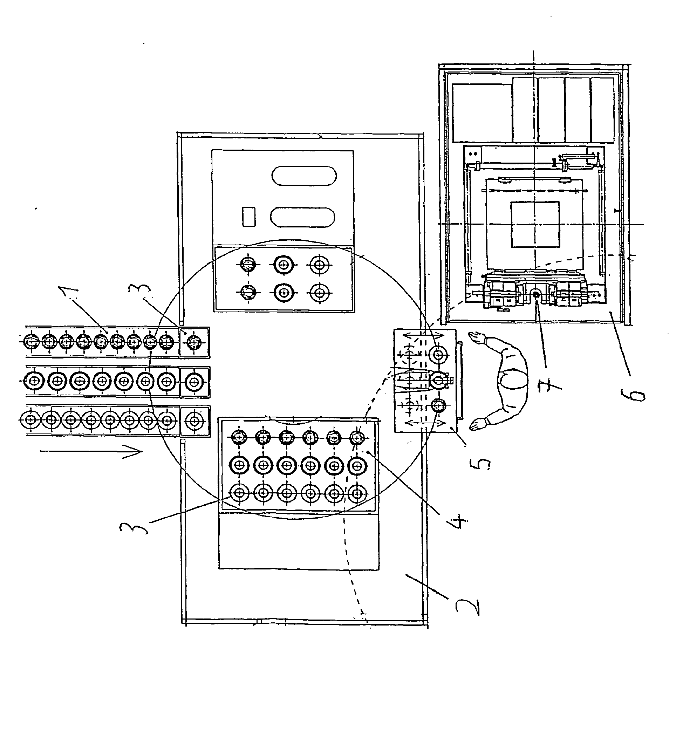

## Patentansprüche

1. Verfahren zur drehfesten Befestigung eines eine Bohrung aufweisenden Triebteils (3), beispielsweise Nockens, Zahnrades, Rades, einer Scheibe o. dgl., auf einer Welle (7), so dass diese durch die Bohrung des bzw. der Triebteile ragt, wobei
- das Triebteil (3) auf eine gewünschte Temperatur erwärmt wird, wodurch sich die Bohrung auf ein Übermaß gegenüber dem Wellendurchmesser aufweitet,
- das erwärmte Triebteil (3) auf der Welle (7) angeordnet,
- an einer vorbestimmten Stelle der Welle (7) positioniert wird und
- abkühlt bei gleichzeitigem Aufschrumpfen auf die Welle (7),
**dadurch gekennzeichnet,**
**dass** das bzw. die erwärmten Triebteile (3) von einem mit einem Greifer ausgebildeten Roboter nach der Heizstrecke (4) abgeholt und automatisch auf die Welle (7) aufgesetzt und dort maßgenau positioniert werden.

2. Verfahren nach Anspruch 1,
**dadurch gekennzeichnet,**
**dass** das Triebteil (3) oder dgl. in mindestens einer Heizeinheit (2) erwärmt wird, indem das zu erwärmende Triebteil (3) durch eine definierte Heizstrecke geführt wird.

3. Verfahren nach Anspruch 1,
**dadurch gekennzeichnet,**
**dass** das Triebteil (3) mit einem Induktionsdorn, mit Heißluft, mit Infrarot oder mit Kontaktwärme erwärmt wird.

4. Verfahren nach Anspruch 2 oder 3,
**dadurch gekennzeichnet,**
**dass** das Triebteil (3) auf die notwendige prozesssichere Temperatur erwärmt wird.

5. Verfahren nach Anspruch 5,
**dadurch gekennzeichnet,**
**dass** das Ende der Erwärmungsphase optisch angezeigt wird.

6. Verfahren nach Anspruch 1,
**dadurch gekennzeichnet,**
**dass** das Triebteil (3) nach dem Positionieren auf der Welle (7) gekühlt wird.

7. Verfahren nach Anspruch 1,
**dadurch gekennzeichnet,**
**dass** nach dem Positionieren und Aufschrumpfen des Triebteils (3) auf die Welle (7) die axiale Position und/oder Ausrichtung des Triebteils (3) gemessen wird.

8. Verfahren nach Anspruch 8,
**dadurch gekennzeichnet,**
**dass** überprüft wird, ob die gemessene Position innerhalb der vorgegebenen Toleranz liegt, dann wird weitergefügt, oder ob die gemessene Position außerhalb der vorgegebenen Toleranz liegt, dann wird die Welle ausgeschleust.

9. Verfahren nach Anspruch 8,
**dadurch gekennzeichnet,**
**dass** die gemessene axiale Position zur Regelung des Fertigungsvorganges verwendet wird.

10. Verfahren nach Anspruch 1 oder 7,
**dadurch gekennzeichnet,**
**dass** die Temperatur der Welle (7) zur Steuerung des Fertigungsvorganges ermittelt wird.

11. Verfahren nach einem der vorhergehenden Ansprüche,
**dadurch gekennzeichnet,**
**dass** die genaue Position des Triebteils (3) auf der Welle (7) durch einen Rechner vorbestimmbar ist.

12. Verfahren nach Anspruch 1,
**dadurch gekennzeichnet,**
**dass** der Roboter mittels Messtaster und/oder Bezugsbauteil geteacht wird.

13. Verfahren nach Anspruch 1,
**dadurch gekennzeichnet,**
**dass** das Triebteil (3) während des Positionierens an der vorbestimmten Stelle der Welle (7) auch in ihrer vorbestimmten Phasenlage positioniert wird.

## Claims

1. A method for the tortionally rigid attachment of a drive part (3), for example cam, gear, wheel,- a disc or similar having a bore on a shaft (7) so that the latter protrudes through the bore of the drive part or parts wherein
- the drive part (3) is heated to a desired temperature, as a result of which the bore expands to an oversize relative to the shaft diameter,
- the heated drive part (3) is arranged on the shaft (7),
- positioned at a predetermined place of the shaft (7)
and
- cools off with simultaneous shrinking onto the shaft (7),
**characterized in that** the heated drive part or parts (3) are collected by a robot designed with a gripper after the heating section (4) and are automatically placed on the shaft (7) where they are positioned accurately to size.

2. The method according to claim 1, **characterized in that** the drive part (3) or similar is heated in at least a heating unit (2) **in that** the drive part (3) to be heated is guided through a defined heating section.

3. The method according to claim 1, **characterized in that** the drive part (3) is heated with an induction mandrel, with hot air, with infrared or with contact heat.

4. The method according to claims 2 or 3, **characterized in that** the drive part (3) is heated to the necessary process-safe temperature.

5. The method according to claim 5, **characterized in that** the end of the heating phase is visually indicated.

6. The method according to claim 1, **characterized in that** the drive part (3) is cooled after positioning on the shaft (7).

7. The method according to claim 1, **characterized in that** after the positioning and shrinking of the drive part (3) on to the shaft (7) the axial position and/or alignment of the drive part (3) is measured.

8. The method according to claim 8, **characterized in that** it is checked if the measured position is within the specified tolerance when joining is continued, or if the measured position is outside the specified tolerance, when the shaft is discarded.

9. The method according to claim 8, **characterized in that** the measured axial position is used for regulating the manufacturing process.

10. The method according to claims 1 or 7, **characterized in that** the temperature of the shaft (7) is determined for controlling the manufacturing process.

11. The method according to any one of the preceding claims, **characterized in that** the exact position of the drive part (3) on the shaft (7) can be predetermined through a computer.

12. The method according to claim 1, **characterized in that** the robot is taught by means of measuring calliper and/or reference component.

13. The method according to claim 1, **characterized in that** the drive part (3) during the positioning at the predetermined place of the shaft (7) is also positioned in its predetermined phase position.

## Revendications

1. Procédé pour la fixation solidaire en rotation d'une pièce d'entraînement (3) présentant un alésage, par exemple une came, une roue dentée, un rouage, un disque ou similaire, sur un arbre (7), de telle sorte que celui-ci saille à travers l'alésage de la, respectivement des pièces d'entraînement, moyennant quoi
- la pièce d'entraînement (3) est chauffée à une température souhaitée, moyennant quoi l'alésage se dilate dans une proportion excessive par rapport au diamètre de l'arbre,
- la pièce d'entraînement (3) chauffée est disposée sur l'arbre (7),
- est positionnée à un emplacement prédéterminé de l'arbre (7) et
- est refroidie simultanément à un frettage sur l'arbre (7),
**caractérisé en ce que**
la, respectivement les pièces d'entraînement (3) sont enlevées après la section de chauffage (4) par un robot réalisé avec un bras de préhension et automatiquement posées sur l'arbre et positionnée aux dimensions prescrites à cet endroit.

2. Procédé selon la revendication 1,
**caractérisé en ce que**
la pièce d'entraînement (3) ou similaire est chauffée dans au moins une unité de chauffage (2), en faisant passer la pièce d'entraînement (3) à réchauffer à travers une section de chauffage définie.

3. Procédé selon la revendication 1,
**caractérisé en ce que**
la pièce d'entraînement (3) est chauffée avec un mandrin d'induction, avec de l'air chaud, avec des infrarouges ou avec une chaleur de contact.

4. Procédé selon la revendication 2 ou 3,
**caractérisé en ce que**
la pièce d'entraînement (3) est chauffée à la température de processus sécurisé nécessaire.

5. Procédé selon la revendication 5,
**caractérisé en ce que**
la fin de la phase de réchauffement est affichée optiquement.

6. Procédé selon la revendication 1,
**caractérisé en ce que**
la pièce d'entraînement (3) est refroidie après le positionnement sur l'arbre (7).

7. Procédé selon la revendication 1,
**caractérisé en ce que**
après le positionnement et le frettage de la pièce d'entraînement (3) sur l'arbre (7), la position axiale et/ou l'orientation de la pièce d'entraînement (3) est mesurée.

8. Procédé selon la revendication 8,
**caractérisé en ce que**
on contrôle si la position mesurée est comprise à l'intérieur d'une plage de tolérance prescrite, puis on continue l'emboîtage, ou si la position mesurée est en dehors de la plage de tolérance prescrite, puis on retire l'arbre.

9. Procédé selon la revendication 8,
**caractérisé en ce que**
la position axiale mesurée est utilisée pour le réglage du processus de fabrication.

10. Procédé selon la revendication 1 ou 7,
**caractérisé en ce que**
la température de l'arbre (7) est déterminée afin de commander le processus de fabrication.

11. Procédé selon une des revendications précédentes,
**caractérisé en ce que**
la position précise de la pièce d'entraînement (3) sur l'arbre peut être prédéterminée par un ordinateur.

12. Procédé selon la revendication 1,
**caractérisé en ce que**
le robot plonge au moyen de palpeurs de mesure et/ou de composants de référence.

13. Procédé selon la revendication 1,
**caractérisé en ce que**
la pièce d'entraînement (3) est positionnée pendant le positionnement à l'emplacement prédéterminé sur l'arbre (7) également à sa position de phase prédéterminée.
